# EUROPEAN PATENT APPLICATION

(11) **EP 3 101 554 A1**
(43) Date of publication of application: **07.12.2016**
(21) Application number: 16169435.1
(22) Date of filing: 12.05.2016
(51) Int. Cl.: G06F 17/22, G06F 17/24

(54) **DOCUMENT CONVERSION**

(30) Priority: 20.05.2015 JP 2015102361
(71) Applicant: Konica Minolta, Inc., Tokyo 100-7015 (JP)
(72) Inventor: KUROKI, Jun, Tokyo, Tokyo 100-7015 (JP)
(74) Representative: Burton, Nick

(57) **Abstract**

A non-transitory computer-readable storage medium storing a document conversion program and a document conversion method, for converting an original document in a first document format which was created by an office suite application into a document in a second document format which is supported by a web browser, are provided. The document conversion program, when being executed, causes a computing device to perform the following processing. The processing includes analyzing the original document to find an object described in a predetermined type of representation according to the first document format; and converting the object described in the predetermined type of representation into a functional object described according to the second document format, to create the document in the second document format, wherein the functional object can be operated by a user in the web browser through an operation unit of a computing device on which the web browser works.

## Description

### TECHNICAL FIELD

The present invention relates to a non-transitory computer-readable storage medium storing a document conversion program and a document conversion method. In particular, the present invention relates to a non-transitory computer-readable storage medium storing a document conversion program and a document conversion method, for converting a document in a first document format, created by an office suite application, such as an OOXML (Office Open XML) document and an ODF (OpenDocument Format) document, into a document in a second document format supported by a web browser, such as a HTML (Hyper Text Markup Language) document.

### BACKGROUND

Web pages are written in a markup language, HTML, and knowledge of the HTML syntax is needed to create web pages. However, to learn the HTML syntax it requires technical knowledge. It can be an obstacle in learning the HTML syntax for beginners and creating web pages is not an easy work for beginners, which were a problem.

On the other hand, office suite applications or applications of productivity software suite, which include a word processor, spreadsheet and so on, are popularly used now in various scenes, for example, for work, school and home. Microsoft Office is one of typical office suites or productivity software suites, and contains Word, Excel, PowerPoint and other components, where Microsoft, Word, Excel and PowerPoint are either registered trademarks or trademarks of Microsoft Corporation in the United States and/or other countries. Further, a plurality of office software suites, such as Apache OpenOffice, and their components having similar features are also in the market. Microsoft Office and Apache OpenOffice serving as an open source were standardized by standardization organizations, and a number of compatible applications supporting the document formats of those office suites: OOXML and ODF are also in the market. Users are used to those applications or components of the office suites, and can create web pages easily by creating a document as a draft of the web pages and saving the document in HTML format by using the applications or components of the office suites.

### DESCRIPTION OF THE RELATED ART

As an example of technology regarding data conversion, which is not a technology to convert an OOXML or ODF document into a HTML document, Japanese Unexamined Patent Publication (JP-A) No. 2012-220965 discloses a document creation device that transcribes data of each item in a transcription source document to a corresponding item in a transcription destination document. The document creation device includes a data file creation unit and a data transcription unit. The data file creation unit is configured to add semantic data to all or a part of the items in the transcription source document, where the semantic data indicates a semantic content of each of the items concerned. The data transcription unit is configured to compare items in the transcription source document with items in the transcription destination document to determine corresponding items, and then transcribe data of the corresponding items in the transcription source document to the corresponding items in the transcription destination document by using the semantic data added to the items in the transcription source document.

In a HTML document, a user can realize HTML-specific features including a feature which allows a user to select a desired option (namely, a pull-down menu or drop-down menu), a feature which allows a user to select multiple options (namely, a multi-select menu), a feature which allows a user to collapse or expand a part of the contents of a document (namely, a collapsible menu or a collapsible object), by describing corresponding elements and attributes to be added into the elements in the HTML document. When an OOXML or ODF document is created and then saved in HTML format by an office suite application, the office suite application converts the OOXML or ODF document into a HTML document with the appearance of the OOXML or ODF document being kept, and it is difficult for a user to realize HTML-specific features in the converted document by such processes, which was a problem.

Relating to the problem, JP-A No. 2012-220965 discloses a technology to transcribe data of each item in a transcription source document to a corresponding item in a transcription destination document, by adding semantic data indicating a semantic content of an item concerned to all or a part of the items in the transcription source document. However, this technology aims at interpreting features peculiar to an account book as a transcription source and is not a technology to specify peculiar features so as to be realized in an account book as transcription destination. On the basis of this technology, it is difficult to create objects which carry out HTML-specific features from an OOXML or DOF document created by an office suite application.

### SUMMARY

A non-transitory computer-readable storage medium reflecting one aspect of the present invention stores a document conversion program to be executed in a computing device. The computing device is capable of converting an original document in a first document format which was created by an office suite application into a document in a second document format which is supported by a web browser. The document conversion program, when being executed by a processor of the computing device, causes the computing device to perform the following processing. The processing comprises analyzing the original document to find, in the original document, an object described in a predetermined type of representation according to the first document format. The processing further comprises converting the object described in the predetermined type of representation into a corresponding functional object described according to the second document format while referring to information to correlate the predetermined type of representation with the functional object, to create the document in the second document format, wherein the functional object can be operated by a user in the web browser through an operation unit of a computing device on which the web browser works.

A document conversion method reflecting one aspect of the present invention is a document conversion method to be used in in a computing device. The computing device is capable of converting an original document in a first document format which was created by an office suite application into a document in a second document format which is supported by a web browser. The method comprises analyzing the original document to find, in the original document, an object described in a predetermined type of representation according to the first document format. The method further comprises converting the object described in the predetermined type of representation into a corresponding functional object described according to the second document format while referring to information to correlate the predetermined type of representation with the functional object, to create the document in the second document format, wherein the functional object can be operated by a user in the web browser through an operation unit of a computing device on which the web browser works.

Other features of illustrative embodiments will be described below.

### BRIEF DESCRIPTION OF THE DRAWINGS

The advantages and features provided by one or more embodiments of the invention will become more fully understood from the detailed description given hereinbelow and the appended drawings which are given by way of illustration only, and thus are not intended as a definition of the limits of the present invention, and wherein:
FIGs. 1A and 1B are block diagrams illustrating an example of the structure of a computing device according to Example 1;
FIG. 2 is a flowchart illustrating an example of the whole operation of the computing device (document conversion processing) according to Example 1;
FIG. 3 illustrates an example of a screen (a conversion-mode selection screen) to be displayed on the computing device according to Example 1;
FIG. 4 is a flowchart illustrating an example of the operation (OOXML object to HTML-specific object conversion) of the computing device according to Example 1;
FIG. 5 illustrates an example of a table showing a relationship of OOXML objects and explicit identifiers according to Example 1;
FIG. 6 is a flowchart illustrating an example of the operation (OOXML object to HTML-specific object conversion based on an explicit identifier) of the computing device according to Example 1;
FIGs. 7A and 7B are diagrams illustrating an example of the conversion from an OOXML object to a multi-select menu object according to Example 1;
FIGs. 8A and 8B are diagrams illustrating an example of the conversion from an OOXML object to a pull-down menu object according to Example 1;
FIG. 9 is a flowchart illustrating an example of the operation (OOXML object to HTML-specific object conversion) of the computing device according to Example 2;
FIG. 10 is a flowchart illustrating an example of the operation (OOXML object to HTML-specific object conversion based on a specific xml element) of the computing device according to Example 2;
FIG. 11 is a flowchart illustrating an example of the operation (OOXML object to HTML-specific object conversion based on a specific description) of the computing device according to Example 2;
FIGs. 12A and 12B are diagrams illustrating an example of the conversion from an OOXML object to a multi-select menu object according to Example 2;
FIGs. 13A and 13B are diagrams illustrating an example of the conversion from an OOXML object to a pull-down menu object according to Example 2;
FIGs. 14A to 14C are diagrams illustrating an example of the conversion from an OOXML object to an object with headings according to Example 2;
FIG. 15 is a diagram illustrating an example of a folder structure of an OOXML document file;
FIGs. 16A to 16C are diagrams illustrating an example of representations for creating a multi-select menu object (in the conversion based on a specific xml element) according to Example 2;
FIGs. 17A to 17C are diagrams illustrating an example of representations for creating a pull-down menu object (in the conversion based on a specific xml element) according to Example 2;
FIGs. 18A to 18C are diagrams illustrating an example of representations for creating an object with headings (in the conversion based on a specific xml element) according to Example 2;
FIGs. 19A and 19B are diagrams illustrating an example of representations for creating a multi-select menu object (in the conversion based on a specific description) according to Example 2;
FIGs. 20A and 20B are diagrams illustrating an example of representations for creating a pull-down menu object (in the conversion based on a specific description) according to Example 2; and
FIGs. 21A and 21B are diagrams illustrating an example of representations for creating an object with an object with headings (in the conversion based on a specific description) according to Example 2.

### DESCRIPTION OF THE PREFERRED EMBODIMENTS

Hereinafter, an embodiment of the present invention will be described with reference to the drawings. However, the scope of the invention is not limited to the illustrated examples.

According to non-transitory computer-readable storage media each storing a document conversion program and document conversion methods as embodiments of the present invention, users can create, from a document in a first document format like OOXML or ODF created by an office suite application, a desired object specific to a second document format (for example, a HTML-specific object), supported by a web browser, for the following reason.

A computing device which can perform document conversion, performs the following processing when executing the document conversion program (which employs the document conversion method). The processing includes analyzing an original document in the first document format created by an office suite application, to find an object described in a predetermined type of representation according to the first document format (for example, an object into which a predetermined identifier is added, an object created by using a specific feature of the office suite application and an object described according to a specific rule), in the original document. The processing further includes converting the object described in the predetermined type of representation into a corresponding functional object described according to the second document format, which can be used in a web browser and allows to a user to operate itself, to create the document in the second document format.

According to the document conversion, a predetermined type of representation of an office suite application and a functional object (an object realizing a feature of HTML) to be a content of a document in the format supported by web browsers (referred to as a web document) are correlated with each other, and an object described in the predetermined type of representation in the original document created by the office suite application is converted into the corresponding functional object. Therefore, a user can easily create a desired object specific to a web document (for example, a HTML-specific object), from a document created by using an office suite application the user is accustomed to use, and can create useful web pages easily.

As described in BACKGROUND, a user can create web pages easily just by creating a draft of web pages and then save it in HTML format with an office suite application that a user is accustomed to use. However, when an OOXML or ODF document created with an office suite application is saved in HTML format, which is supported by web browsers, the document is converted in a HTML document with the appearance of the original document being kept and it is difficult to realize features specific to HTML format in the converted document on the basis of the OOXML or ODF document, which was a problem.

In other words, since office suite applications do not support HTML-specific features, HTML-specific objects which realize features specific to HTML format are not created by simply saving a document created by an office suite application in HTML format.

In view of that, an embodiment according to the present invention provides the following conversion of an original document in a first document format (such as OOXML and ODF) created by an office suite application into a document in a second document format supported by web browsers, instead of conversion of the original document to a document having the equivalent appearance. In advance to the document conversion, a predetermined type of representation described according to the format of the office suite application is correlated with a functional object described according to the second document format (for example, an object realizing a feature of HTML, such as user interface parts contained in a web document) so that an object described in the predetermined type of representation can be converted in a corresponding functional object described according to the second document format (a HTML-specific functional object). In other words, the following document conversion is performed by using a predetermined type of representation described according to the format of the office suite application and a functional object described according to the second document format which have been correlated with each other and saved in advance to the conversion. The document conversion includes analyzing the original document in the first document format to find an object described in the predetermined type of representation according to the first document format, in the original document; and converting the object described in the predetermined type of representation into a corresponding functional object described according to the second document format while referring to the information about the correlation saved in advance, to create the document in the second document format. In this processing, the functional object is an object which is a component of the document in the second document format and can be operated by a user in a web browser through an operation unit of a computing device on which the web browser works. For example, the functional object may be a user interface part which realizes a feature of HTML format in the document, such as a multi-select menu object which allows a user to select plural options, a pull-down or drop-down list object which allows a user to select an option, and a collapsible object (an object with a collapsible menu) which allows a user to expand or collapse a part of the contents of the document.

In concrete terms, it is assumed that, when creating an original document in the first document format, such as OOXML and ODF, by using an office suite application, a user added a predetermined identifier into an object, used a specific feature of the office suite application, or made specific description according to a specific rule. One embodiment according to the present invention employs the following conversion of the original document created as described above by using the office suite application.

In the document conversion, the original document is analyzed to find an object described in a predetermined type of representation according to the first document format.

In this process, it may be judged whether or not a predetermined identifier is added into an object in the first document format contained in the original document, and when an object into which the predetermined identifier is added is found in the original document, the object may be determined as an object described in the predetermined type of representation. When the object into which the predetermined identifier is added is found in the original document, the object is converted into the corresponding functional object on the basis of the predetermined identifier. For example, a corresponding HTML-specific feature may be determined on the basis of the predetermined identifier, and in the conversion of the original document to a HTML document, a HTML-specific object which realizes the determined HTML-specific feature may be created. In this process, if in the original document, there has been found an object in which a plurality of items are arranged one below the other and the predetermined identifier is described as a first item of the plurality of items, the plurality of items excluding the first item may be converted into the functional object correlated with the predetermined identifier.

As another example, on analyzing the original document, it may be judged whether or not the original document has a folder structure including a specific xml element, and the object described in the predetermined type of representation may be determined on the basis of the specific xml element. When the specific xml element is found in the folder structure, the object in the first document format contained in the original document is converted into the corresponding functional object on the basis of the specific xml element. For example, if a user created an object by using a specific feature of an office suite application when creating the original document, a HTML-specific feature corresponding to the feature of the office suite application may be determined by judging the existence of a specific xml element in the folder structure of the original document, and in the conversion of the original document to a HTML document, a HTML-specific object which realizes the HTML-specific feature determined may be created. In this process, a functional object in the second document format correlated with a specific character string described the xml element may be determined and then the object described in the predetermined type of representation may be converted into the determined functional object.

As another example, on analyzing the original document, it may be judged whether or not the original document includes a specific description, and the object described in the predetermined type of representation may be determined on the basis of the specific description. When the specific description is found in the original document, the object described in the predetermined type of representation is converted into the corresponding functional object on the basis of the specific description. For example, when there is found a description according to a specific rule in the original document, a corresponding HTML-specific feature may be determined on the basis of the description, and in the conversion of the original document to a HTML document, a HTML-specific object which realizes the determined HTML-specific feature may be created. In this process, when one of letters, numbers and symbols located at the heads of paragraphs in the original document are found as the specific description, contents of the paragraphs may be converted into the functional object correlated with the specific description.

According to the document conversion, when a user creates a document by using an office suite application the user is accustomed to use, the user can easily create a desired object specific to a format supported by a web browser (a HTML-specific object) just by adding a predetermined identifier into the document, using a specific feature of the office suite application or making description according to a predetermined rule in the document, and can create useful web pages.

### EXAMPLES

### EXAMPLE 1

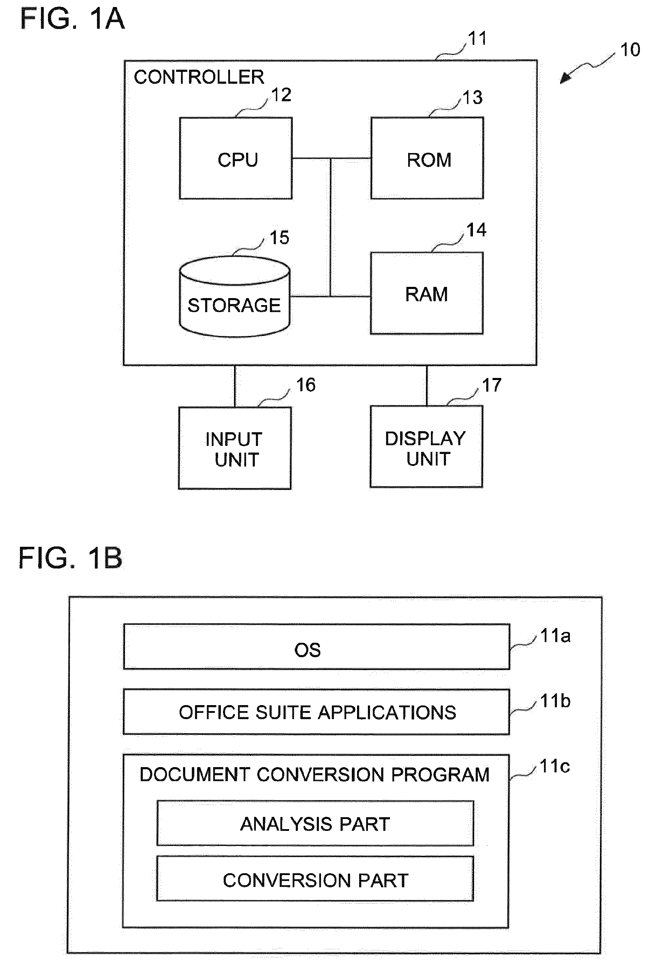

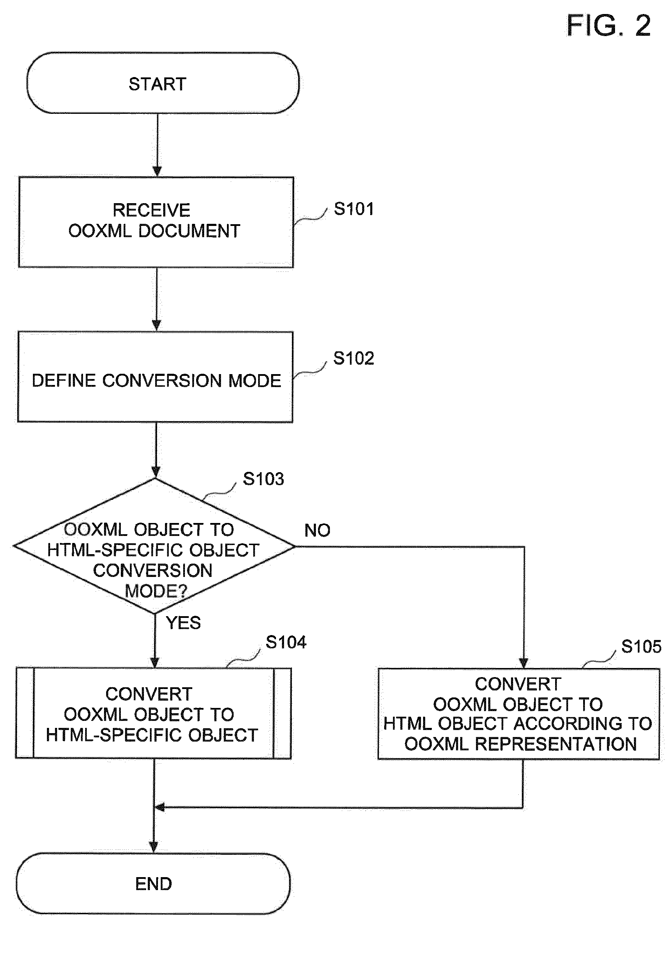

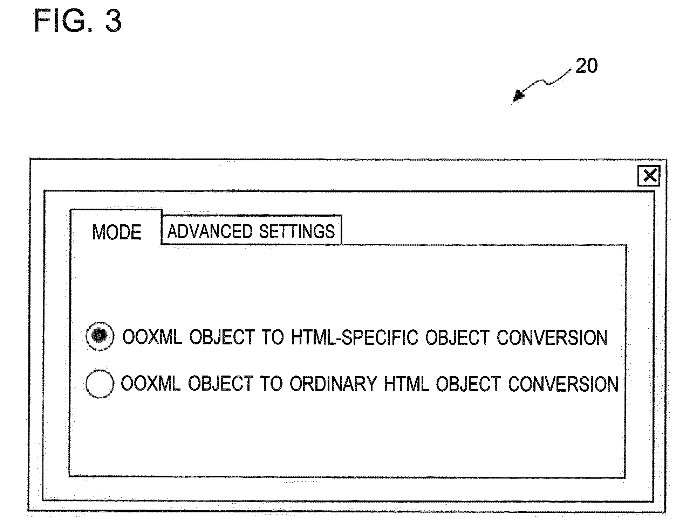

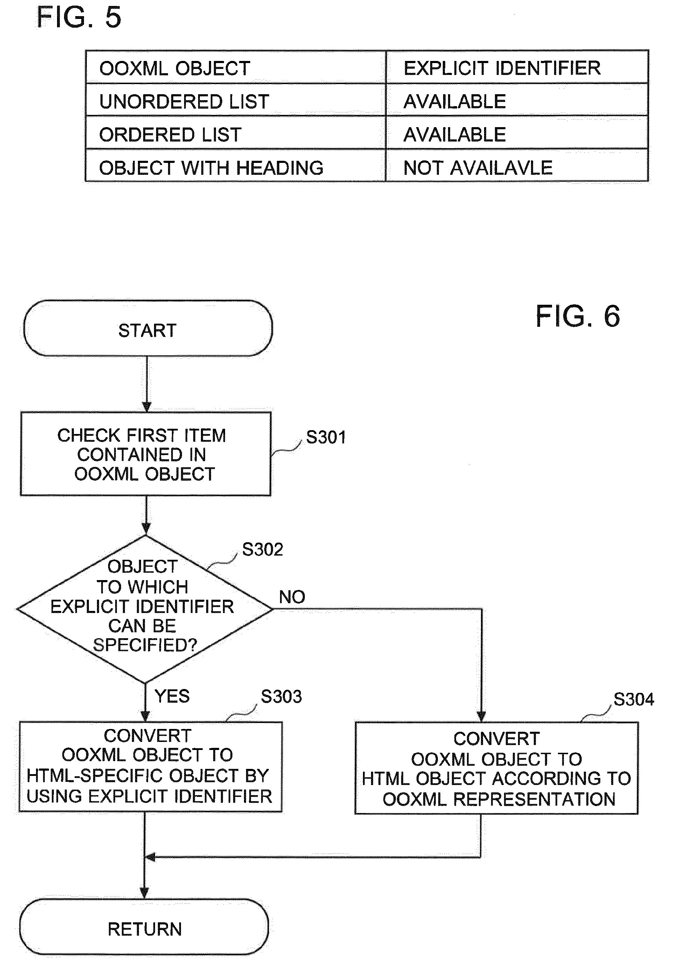

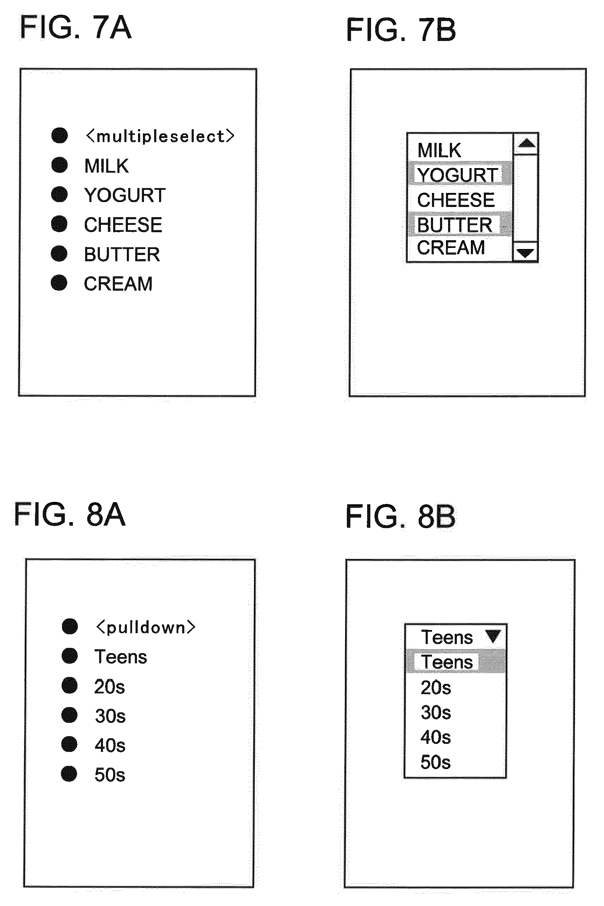

In order to describe in more detail the above-mentioned embodiments of the present invention, description will be given to an example of a non-transitory computer-readable storage medium storing a document conversion program and a document conversion method with reference to FIG. 1A to FIG. 8B. FIGs. 1A and 1B are block diagrams illustrating an example of the structure of a computing device according to Example 1. Each of FIG. 2, FIG. 4 and FIG. 6 is a flowchart illustrating an example of the operation of the computing device according to Example 1. FIG. 3 illustrates an example of a screen (a conversion-mode selection screen) to be displayed on the computing device according to Example 1. FIG. 5 illustrates an example of a table showing a relationship of OOXML objects and explicit identifiers. FIGs. 7A and 7B and FIGs. 8A and 8B are diagrams illustrating examples of the conversion from an OOXML object to a HTML-specific object.

As computing device 10 of the present example illustrated in FIG. 1A, the following information processing apparatuses can be employed: personal computers; mobile terminals, such as smartphones and tablet terminals; and servers installed on a network. The computing device 10 includes controller 11, input unit 16 and display unit 17.

Controller 11 includes CPU (Central Processing Unit) 12, ROM (Read Only Memory) 13, RAM (Random Access Memory) 14 and storage 15, such as a HDD (Hard Disk Drive) and a SSD (Solid State Drive). CPU 12 reads control programs stored in ROM 13 and/or storage 15 from ROM 23, loads the control programs onto RAM 14, and executes the control programs, thereby performing the whole control of the computing device 10.

Input unit 16 includes a device such as a mouse, a keyboard and a touch panel, and allows a user to perform various operations including creating a document by using office suite applications 11b illustrated in FIG. 1B, selecting a conversion mode which will be described later, and operating menus or other UI parts in a screen of a web browser (in a web page).

Display unit 17 includes a display unit such as a LCD (Liquid Crystal Display) and organic EL (Electro-Luminescence) display, so as to display screens of creating documents of office suite applications 11b, a screen of selecting a conversion mode, a screen of a web browser and the like.

As illustrated in FIG. 1B, controller 11 executes OS (Operating System) 11a, office suite applications 11b and document conversion program 11c.

Examples of OS 11 a include Microsoft Windows and Apple OS X, where Microsoft and Windows are either registered trademarks or trademarks of Microsoft Corporation in the United States and/or other countries, and Apple and OS X are either registered trademarks or trademarks of Apple Inc. in the United States and/or other countries. OS 11 a manages application programs including office suite applications 11b and document conversion program 11c in computing device 10 so as to function and run the application programs.

Office suite applications 11b are software programs including, for example, a word processor, a spreadsheet, and an image or photo editor, and allow a user to create OOXML or ODF documents from which web pages are to be originated (referred to as original documents). In the present example, description is given by using Microsoft Word as one instance of office suite applications 11b.

Document conversion program 11 c, when being executed by CPU 12, causes the computing device 10 (controller 11) to convert an original document in OOXML format or ODF (the first document format) created by office suite application 11b into a document in HTML format (the second document format) supported by web browsers. The document conversion program 11c includes an analysis part and a conversion part.

The analysis part, when being executed, causes controller 11 to perform the following processing. The processing includes analyzing an original document in OOXML format or ODF to judge whether the file name of the original document includes a certain keyword. The processing further includes judging whether or not a predetermined identifier (referred to as an explicit identifier) which specifies a HTML-specific feature is added into each of objects contained in the original document, that is, finding an object described in a predetermined type of representation according to the first document format in the original document. The processing further includes judging whether each of the objects contained in the original document can be a target of conversion to a HTML-specific object, and judging whether the conversion to a HTML-specific object can be specified to each of the objects in the original document.

The conversion part, when being executed, causes controller 11 to perform the following processing. The processing includes, on the basis of whether the file name of the original document includes the predetermined keyword, changing a conversion mode to one of the following two modes and converting the original document in OOXML format or ODF (the first document format) created by office suite application 11b in a HTML format (the second document format) supported by web browsers according to the conversion mode, to create a HTML document (a document in the second document format). The modes includes: a first mode to convert an object in the original document into a corresponding HTML-specific object (that is, a first mode to convert an object described in the predetermined type of representation into a corresponding functional object described according to the second document format); and a second mode to convert an object in the original document into a corresponding ordinary HTML object (that is, a second mode to convert an object described in the predetermined type of representation into an object described according to the second document format and having the same or similar appearance). The processing further includes, on finding an object into which a predetermined identifier is added in the original document (for example, finding an object in which plural items are arranged one below the other and the predetermined identifier is described as the first item of the plurality of items), converting the items of the object excluding the first item into a corresponding HTML-specific object on the basis of the explicit identifier. That is, the conversion part, when being executed, causes controller 11 to convert the object described in the predetermined type of representation into the correlated functional object in the second document format, which can be operated by a user in a web browser through an operation unit of a computing device on which a web browser works (for example, input unit 16 of computing device 10) while referring information to correlate an object described in the predetermined type of representation according to the first document format with a functional object in the second document format, which was prepared and recorded in advance to the conversion.

Though in the above description about FIG. 1A information processing apparatuses were cited as examples of computing device 10, an image forming apparatus such as a MFP (Multi-Functional Peripheral) may be employed as another example of the computing device 10. Though computing device 10 illustrated in FIG. 1A is configured to work independently, computing device 10 may be connected to a communication network and may be configured to receive data of an original document in OOXML format or ODF created by another computing device connected to the communication network and convert the received original document in HTML format, and/or may be configured to send the data of the converted document in HTML format to another computing device connected to the communication network. In other words, the computing device 10 of the present example may have an arbitrary structure as far as the computing device 10 has at least the structure on which the document conversion program can be executed.

Next, description is given to operations of computing device 10 having the above-described structure. CPU 12 loads the document conversion program stored in ROM 13 or storage 15 onto the RAM 14 and executes the program, thereby executing processing of steps of the flowcharts illustrated in FIGs. 2, 4 and 6. The following description is given on the assumption that an original document to be converted is an OOXML document. If the original document is an ODF document, the similar processing should be executed.

As illustrated in FIG. 2, the document conversion program causes controller 11 to receive an OOXML document from office suite application 11b inside the computing device 10 or an external computing device (S101), and then define an object conversion mode from two modes (S102). The first is a mode to convert a certain OOXML object into a corresponding HTML-specific object (an OOXML object to HTML-specific object conversion mode), and the second is a mode to convert an OOXML object into a corresponding HTML object according to the representation of the OOXML document, in other words, convert an OOXML object into a corresponding HTML object having the same or similar appearance as the OOXML object (an OOXML object to ordinary HTML object conversion mode).

If the document conversion program has GUI or Graphical User Interfaces, switching of these modes can be made by a user through the GUI. FIG. 3 illustrates an example of a dialog box or a UI screen (conversion-mode selection screen 20) to be displayed on display unit 17 when a user sets the mode through the GUI. In response to user's selection of the modes on the conversion-mode selection screen 20, the conversion part of the document conversion program causes controller 11 to change the conversion mode to the mode selected by the user.

If the file name of the OOXML document received includes a certain keyword which indicates the conversion mode, the analysis part of the document conversion program may cause controller 11 to judge whether the file name includes the certain keyword and the conversion part of the document conversion program may cause controller 11 change the conversion mode according to a result of the judgement. For example, if the file name is "Sample 1 [Specific].docx" which includes the keyword "[Specific]", the conversion mode is changed to the OOXML object to HTML-specific object conversion mode, and if the file name is "Sample 1 [Ordinary].docx" which includes the keyword "[Ordinary]", the conversion mode is changed to the OOXML object to ordinary HTML object conversion mode.

If the conversion mode is set to the OOXML object to HTML-specific object conversion mode (YES at S103), the document conversion program causes controller 11 to convert an OOXML object to a corresponding HTML-specific object (S104). If the conversion mode is set to the OOXML object to ordinary HTML object conversion mode (NO at S103), the document conversion program causes controller 11 to convert an OOXML object to a corresponding HTML object according to the OOXML representation of the original document (S105).

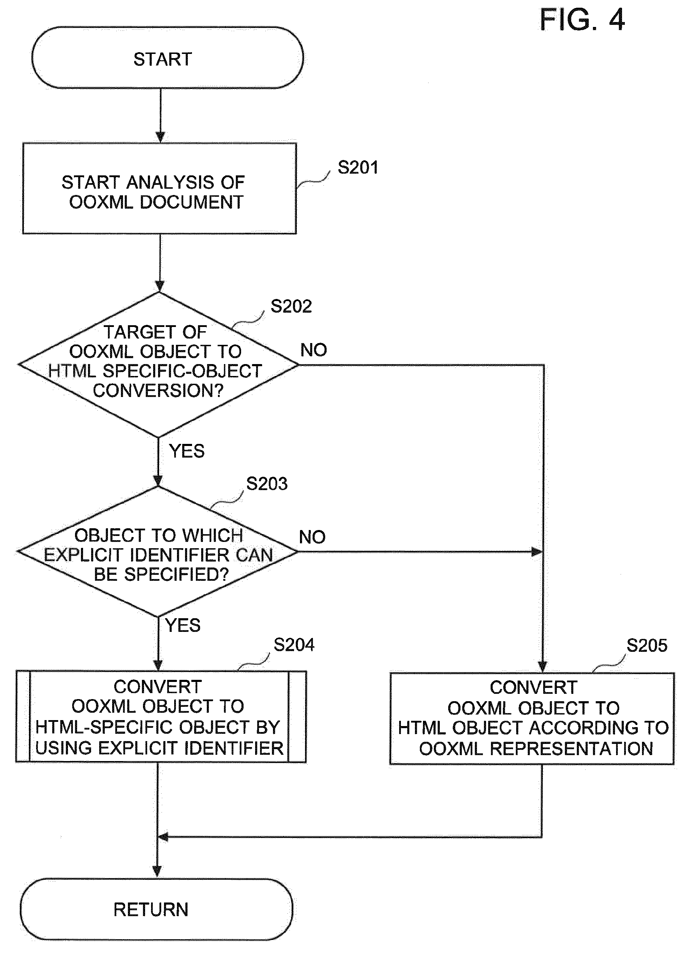

FIG. 4 illustrates the details of conversion of an OOXML object to a corresponding HTML-specific object at S104. First, the analysis part of the document conversion program causes controller 11 to analyze an OOXML document received (S201) and judge whether each of objects contained in the OOXML document is a target to be converted into a HTML-specific object (S202). For example, an object created by using a specific feature of office suite application 11b (such as a feature to create an unordered list and a feature to create an ordered list) is judged as a target to be converted into a HTML-specific object. When finding an object which is not a target to be converted into a HTML-specific object, the conversion part of the document conversion program causes controller 11 to convert the object to the corresponding HTML object according to the OOXML representation of the original document to create a HTML document (S205).

When finding an object which is a target to be converted into a HTML-specific object, the conversion part of the document conversion program causes controller 11 to judge whether the OOXML object is an object to which an explicit identifier can be specified by referring to a table which was prepared and contained in advance in the document conversion program (S203). FIG. 5 illustrates an example of the table. For example, an OOXML object which is an unordered list and an OOXML object which is an ordered list are objects to which an explicit identifier can be specified, and an OOXML object with a heading of a chapter or section is an object to which an explicit identifier cannot be specified. When judging that the OOXML object is not an object to which an explicit identifier can be specified, the conversion part of the document conversion program causes controller 11 to convert the object to the corresponding HTML object according to the OOXML representation of the original document to create a HTML document (S205). When judging that the OOXML object is an object to which an explicit identifier can be specified, the conversion part of the document conversion program causes controller 11 to convert the OOXML object to a corresponding HTML-specific object on the basis of the explicit identifier to create a HTML document (S204).

FIG. 6 illustrates the details of conversion of an OOXML object to a corresponding HTML-specific object on the basis of the explicit identifier at S204. First, the analysis part of the document conversion program causes controller 11 to analyze the first item of the OOXML document (for example, the first line or item of an unordered list object or an ordered list object) (S301). When judging that the OOXML object can be processed on the basis of an explicit identifier, as a result of the analysis (YES at S302), the conversion part of the document conversion program causes controller 11 to convert the object to the HTML-specific object specified by the explicit identifier (S303). On the other hand, when judging that the OOXML object cannot be processed on the basis of an explicit identifier, as a result of the analysis (NO at S302), the conversion part of the document conversion program causes controller 11 to convert the object to the ordinary HTML object according to OOXML representation of the original document (S304). Examples of the conditions that the OOXML object cannot be processed on the basis of an explicit identifier include a condition that the explicit identifier has a typographical error and a condition that an explicit identifier specified in the object cannot be correlated with any of OOXML objects in the table.

FIGs. 7A and 7B illustrate an example of conversion of an OOXML object to which an explicit identifier can be specified into a HTML specific object, where the OOXML object includes plural items to form a single-level list and the explicit identifier "<multipleselect>" is added to the object to be the first item. FIG. 7A illustrates the OOXML object before the conversion and FIG. 7B illustrates the HTML-specific object after the conversion. When finding that the explicit identifier "<multipleselect>" is added into the OOXML object, the conversion part of the document conversion program causes controller 11 to convert the second and succeeding items among the items of the object described by using a unordered list feature of the OOXML application, into a multi-select menu object in HTML format.

FIGs. 8A and 8B illustrate another example of conversion of an OOXML object to which an explicit identifier can be specified into a HTML specific object, where the OOXML object includes plural items to form a single-level list and the explicit identifier "<pulldown>" is added to the object to be the first item. FIG. 8A illustrates the OOXML object before the conversion and FIG. 8B illustrates the HTML-specific object after the conversion. When finding that the explicit identifier "< pulldown >" is added into the OOXML object, the conversion part of the document conversion program causes controller 11 to convert the second and succeeding items among the items of the object described by using a unordered list feature of the OOXML application, into a pull-down (or drop-down) menu object in HTML format.

The above-described explicit identifiers were given by way of illustration only, and it should be noted that, for the explicit identifier, an arbitrary character string can be used as far as the character string can be recognized as an explicit identifier in the execution of the document conversion program by controller 11. In the examples illustrated in FIGs. 7A to 8B, an explicit identifier was added into the OOXML object so as to be the first item among items of a list (in other words, to be at the top of the items arranged one below the other in the object). It should be noted that the explicit identifier can be added at an arbitrary position (for example, added as the last item) in the OOXML object as far as the position can be recognized in the execution of the document conversion program by controller 11. In the examples illustrated in FIGs. 7A to 8B, an unordered list with items marked with bullets was given as an example of OOXML objects to which an explicit identifier can be specified, and it should be noted that the items may be marked with arbitrary markers or symbols and that the list may be an ordered list with items marked with running numbers (indicating the order of items or paragraphs) in place of symbols.

In the present example, the document conversion method includes, in response to finding a specific OOXML object in which a predetermined explicit identifier is added in the original document, converting the OOXML object into a HTML-specific object specified by the explicit identifier. It allows a user to convert a document created by office suite application 11b into a desired HTML document which reflects a user's intention.

### EXAMPLE 2

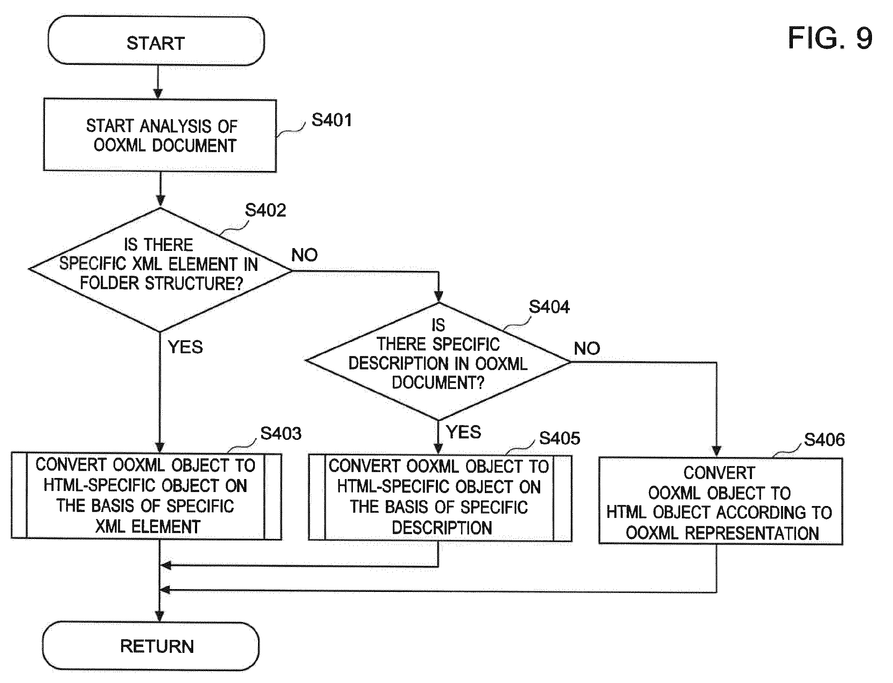

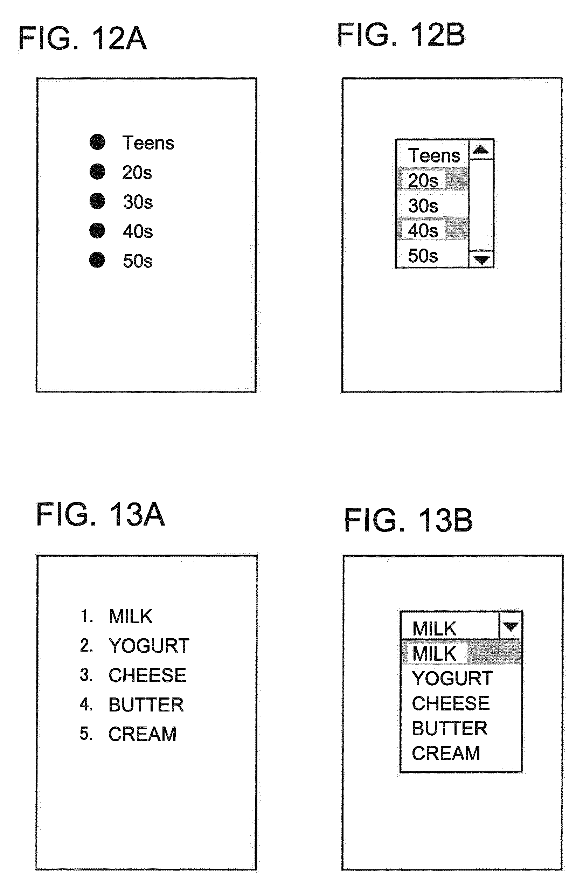

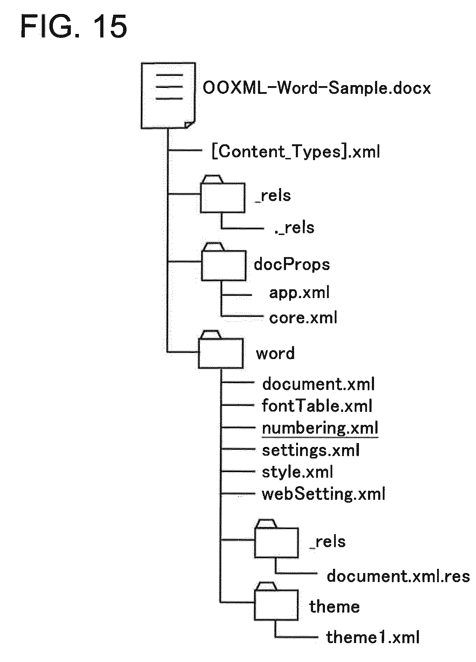

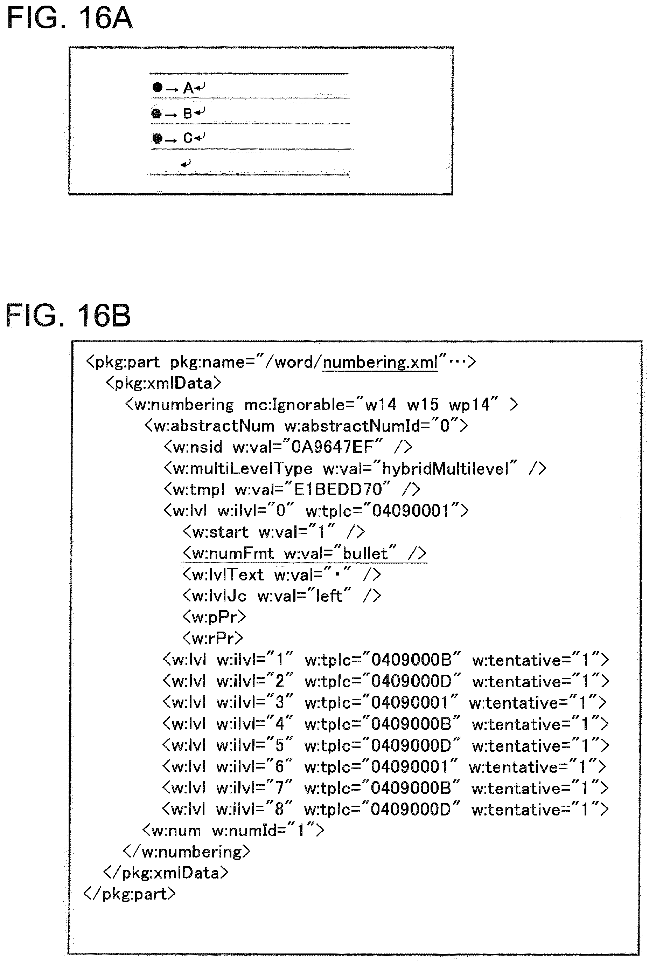

Next, description will be given to another example of a non-transitory computer-readable storage medium storing a document conversion program and a document conversion method with reference to FIG. 9 to FIG. 21B. Each of FIGs. 9 to 11 is a flowchart illustrating an example of the operation of the computing device according to the present example. FIGs. 12A and 12B, FIGs. 13A and 13B and FIGs. 14A to 14C are diagrams illustrating examples of the conversion from an OOXML object to a HTML-specific object. FIG. 15 is a diagram illustrating an example of a folder structure of an OOXML document file. FIGs. 16A to 21B are diagrams illustrating examples of representations for creating a specific HTML-specific object.

In Example 1, description was given to the document conversion by using a document created by a user with office suite application 11b, where the user added an explicit identifier into a specific OOXML object when creating the document. In the present example, the document conversion program, when being executed, causes computing device 10 (controller 11) to find a specific OOXML document automatically (without using description added intentionally by a user into the document) and convert the specific OOXML document into a corresponding HTML-specific document.

Though the structure of computing device 10 is the same as that of Example 1 illustrated in FIGs. 1A and 1B, the document conversion program of the present example, when being executed, causes computing device 10 (controller 11) to perform the following processing. The analysis part of the document conversion program causes controller 11 to analyze an original document in OOXML format or ODF to judge whether or not the original document has the folder structure including a specific xml element and judge whether or not the original document includes a predetermined description, such as letters, numbers and symbols, described according to specific rules. The conversion part of the document conversion program causes controller 11 to convert an original document in OOXML format or ODF into a document in HTML format. The document conversion includes, converting an OOXML object into a corresponding HTML-specific object on the basis of a specific xml element when finding the specific xml element in the folder structure of the original document; and converting an OOXML object into a corresponding HTML-specific object on the basis of description according to specific rules when finding specific description, that is, letters, numbers or symbols described according to specific rules, in the original document.

Hereinafter, description is given to the operations of computing device 10 having the above-described structure. CPU 12 loads the document conversion program stored in ROM 13 or storage 15 onto the RAM 14 and executes the program, thereby executing processing of steps of the flowcharts illustrated in FIGs. 9 to 11. The following description is given on the assumption that an original document to be converted is an OOXML document. If the original document is an ODF document the similar processing should be executed. Further, the processes of Example 1, illustrated in the flowchart of FIG. 2 are the same as those of the present example, and the description corresponding to the processes for the present example is omitted.

FIG. 9 illustrates the details of conversion of an OOXML object to a corresponding HTML-specific object at S104. First, the analysis part of the document conversion program causes controller 11 to analyze an OOXML document received (S401) and judges whether there is a specific xml element in the folder structure of the OOXML document (S402). When finding a specific xml element in the folder structure of the OOXML document, the conversion part of the document conversion program causes controller 11 to convert an OOXML object specified by the specific xml element into a HTML-specific object to create a HTML document (S403). Details of the folder structure of the OOXML document and a specific xml element will be described later.

When finding no specific xml element in the folder structure of the OOXML document, the analysis part of the document conversion program causes controller 11 to judge whether or not the OOXML document includes a specific description (letters, numbers or symbols described according to a specific rule) (S404). Details of the specific description will also be described later. When finding a specific description in the OOXML document, the conversion part of the document conversion program causes controller 11 to convert an OOXML object including the specific description into a HTML-specific object corresponding to the specific description to create a HTML document (S405). When finding no specific description in the OOXML document, the conversion part of the document conversion program causes controller 11 to convert an OOXML object into an ordinal HTML object corresponding to OOXML representation of the original documents to create a HTML document (S406).

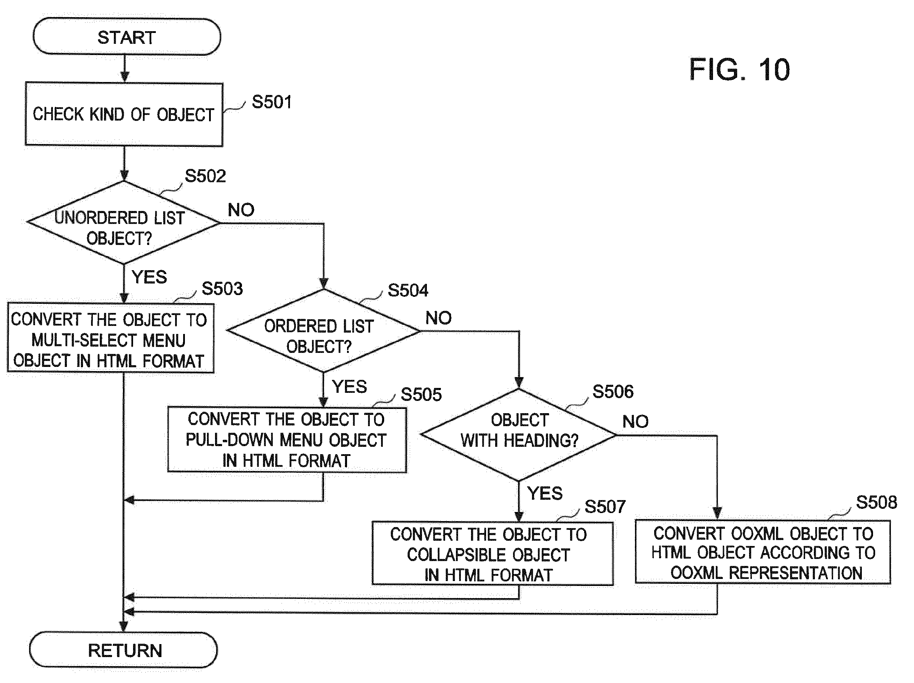

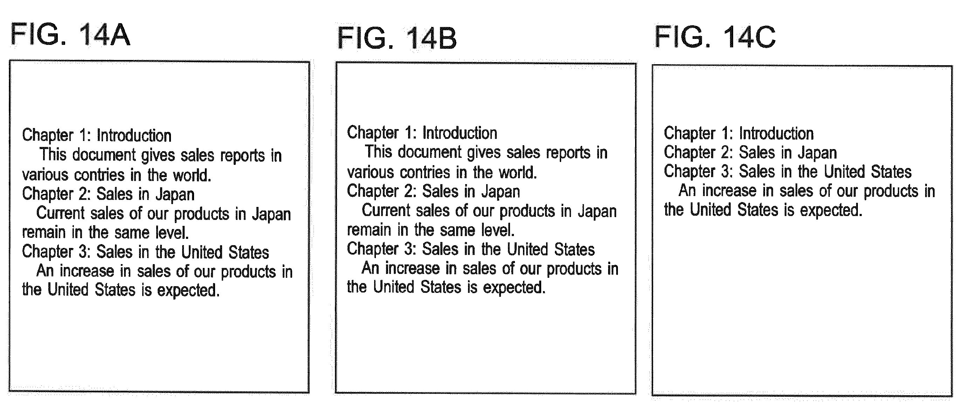

FIG. 10 illustrates the details of conversion of an OOXML object to a corresponding HTML-specific object on the basis of the explicit xml element at S403. First, the analysis part of the document conversion program causes controller 11 to check the kind of the OOXML object specified by the xml element (S501). The kind of an OOXML object specified by the xml element can be checked, for example, on the basis of a character string described in the xml element. Then, the conversion part of the document conversion program causes controller 11 to convert the OOXML object to a corresponding HTML-specific object on the basis of the kind the object while referring to information to correlate a predetermined type of representation described according to OOXML format with a HTML-specific object (a functional object in HTML format), which was prepared and saved in advance to the conversion. In concrete terms, if the kind of the object is an "unordered list object" (YES at S502), the conversion part of the document conversion program causes controller 11 to convert the OOXML object into a multi-select menu object in HTML format as illustrated in FIGs. 12A and 12B (S503). If the kind of the object is an "ordered list object" (NO at S502 and YES at S504), the document conversion program (conversion part) causes controller 11 to convert the OOXML object into a pull-down menu object in HTML format as illustrated in FIGs. 13A and 13B (S505). If the kind of the object is an "object with a heading" (NO at S504 and YES at S506), the conversion part of the document conversion program causes controller 11 to convert the OOXML object into a collapsible object (an object with a collapsible menu) in HTML format as illustrated in FIGs. 14A, 14B and 14C (S507). If the kind of the object is not an "object with a heading" (NO at S506), the conversion part of the document conversion program causes controller 11 to convert the OOXML object into an ordinary HTML object corresponding to OOXML representation of the original document (S508). If another HTML object to which an OOXML object is to be converted is defined in the original document, other than those kinds of object, the conversion part of the document conversion program causes controller 11 to convert the OOXML object into a corresponding HTML object according to the definition.

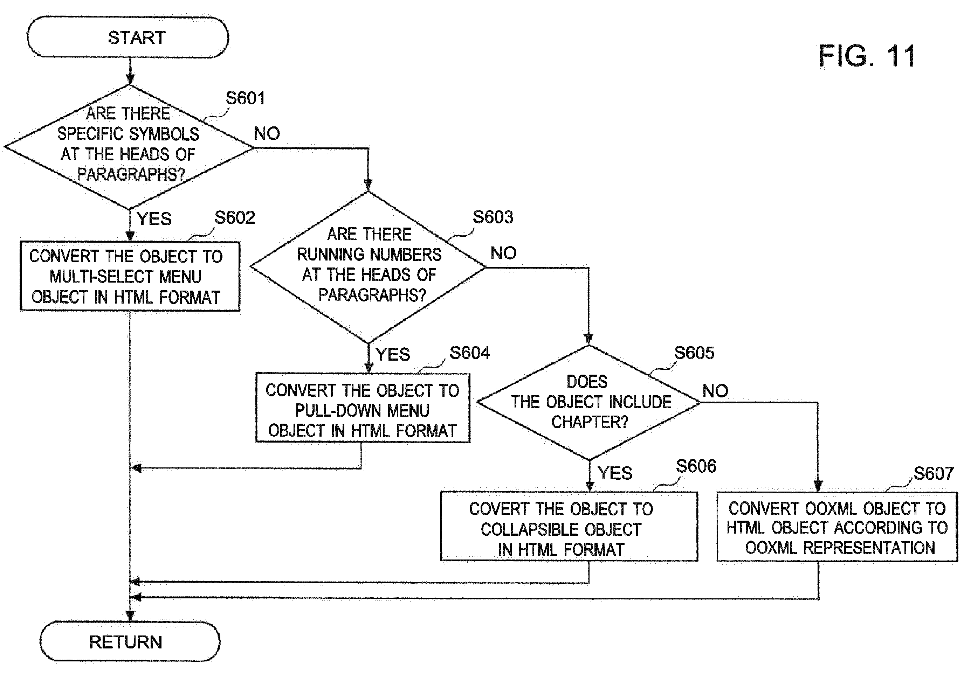

FIG. 11 illustrates the details of conversion of an OOXML object to a corresponding HTML-specific object on the basis of the specific description at S405. First, the analysis part of the document conversion program causes controller 11 to judge whether or not a specific symbol (for example, a bullet or a small sold circle) is located at the head of each of paragraphs in the original document (S601). When finding specific symbols at the heads of paragraphs in the original document, as illustrated in FIGs. 12A and 12B, the conversion part of the document conversion program causes controller 11 to convert the contents of the paragraphs (text following the symbol in each paragraph) into a multi-select menu object in HTML format while referring to information to correlate a predetermined type of representation described according to OOXML format with a HTML-specific object (a functional object in HTML format), which was prepared and saved in advance to the conversion (S602). When finding no specific symbols at the heads of paragraphs in the original document, the analysis part of the document conversion program causes controller 11 to judge whether or not running numbers or letters (for example, numbers like 1, 2 and so on or letters like a, b and so on) are located at the heads of paragraphs in the original document (S603). When finding running numbers or letters at the heads of paragraphs in the original document, as illustrated in FIGs. 13A and 13B, the conversion part of the document conversion program causes controller 11 to convert the contents of the paragraphs (text following the symbol in each paragraph) into a pull-down menu object in HTML format while referring to information to correlate a predetermined type of representation described according to OOXML format with a HTML-specific object (a functional object in HTML format), which was prepared and saved in advance to the conversion (S604). When finding no numbers or letters at the heads of paragraphs in the original document, the analysis part of the document conversion program causes controller 11 to judge whether or not the object include one or more chapters (S605). When fining an OOXML object including one or more chapters, the conversion part of the document conversion program causes controller 11 to convert the OOXML object into a collapsible object in HTML format as illustrated in FIGs. 14A, 14B and 14C while referring to information to correlate a predetermined type of representation described according to OOXML format with a HTML-specific object (a functional object in HTML format), which was prepared and saved in advance to the conversion (S606). When fining an OOXML object including no chapters, the conversion part of the document conversion program causes controller 11 to convert the OOXML object into an ordinary HTML object corresponding to OOXML representation of the original document (S607). If another HTML object to which an OOXML object is to be converted is defined in the original document, other than those kinds of object, the conversion part of the document conversion program causes controller 11 to convert the OOXML object into a corresponding HTML object according to the definition.

FIGs. 12A and 12B illustrate an example of an input (an OOXML object) and an output (a HTML-specific object) of conversion of an unordered list object in OOXML format into a multi-select menu object in HTML format. FIGs. 13A and 13B illustrate an example of an input (an OOXML object) and an output (a HTML-specific object) of conversion of an ordered list object in OOXML format into a pull-down menu object in HTML format. FIG. 14A and FIGs. 14B and 14C illustrate an example of an input (an OOXML object) and outputs (a HTML-specific object) of conversion of an object with headings in OOXML format into a collapsible object in HTML format. FIG. 14B illustrates an example of the HTML-specific object with all the chapters expanded, and FIG. 14C illustrates another example of the HTML-specific object with the first and second chapters collapsed and the third chapter expanded.

FIG. 15 illustrate an example of the folder structure of an OOXML document file which includes [Content_Types].xml, _rels folder, docProps folder and word folder. In the folder structure of an OOXML document in which an unordered list object, an ordered list object or an object with headings was created, a specific xml file "numbering.xml" appears in the word folder. Therefore, when finding the xml file "numbering.xml" in the folder structure in an OOXML document file, it can be judged that an object in the OOXML document can be converted into a corresponding HTML-specific object.

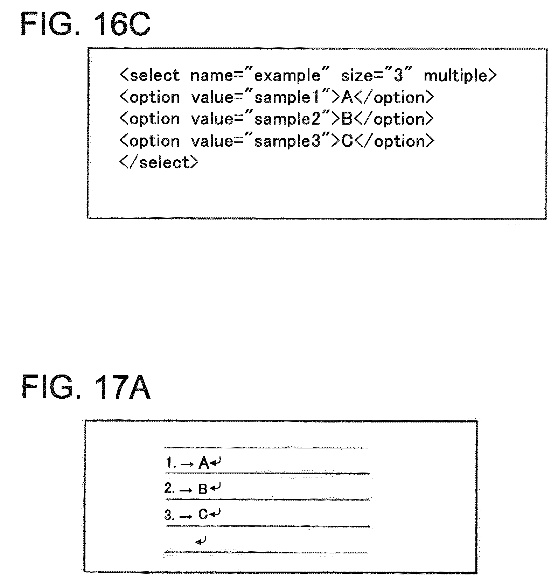

FIGs. 16A to 21B illustrate concrete examples of the conversion of a document created by a user with Microsoft Word as an instance of office suite application11b. Each of FIGs. 16A, 17A, 18A, 19A, 20A and 21A illustrates an example of representation of the document in the office suite application 11b. Each of FIGs. 16B, 17B, 18B, 19B, 20B and 21B illustrates an example of xml representation of the corresponding OOXML document file. Each of FIGs. 16C, 17C and 18C illustrates an example of HTML representation of the converted document.

FIG. 16A illustrates an example of an unordered list object created by using the feature to create an unordered list of Microsoft Word. In the created OOXML document file, as illustrated in FIG. 16B, the character string "<w:numFmt w:val="bullet" />" appears in the xml file "numbering.xml". Therefore, when the character string "bullet" is found in the xml file "numbering.xml", a corresponding OOXML object in the OOXML document can be judged as an unordered list object. The conversion part of the document conversion program causes controller 11 to make HTML description as illustrated in FIG. 16C to create a multi-select menu object.

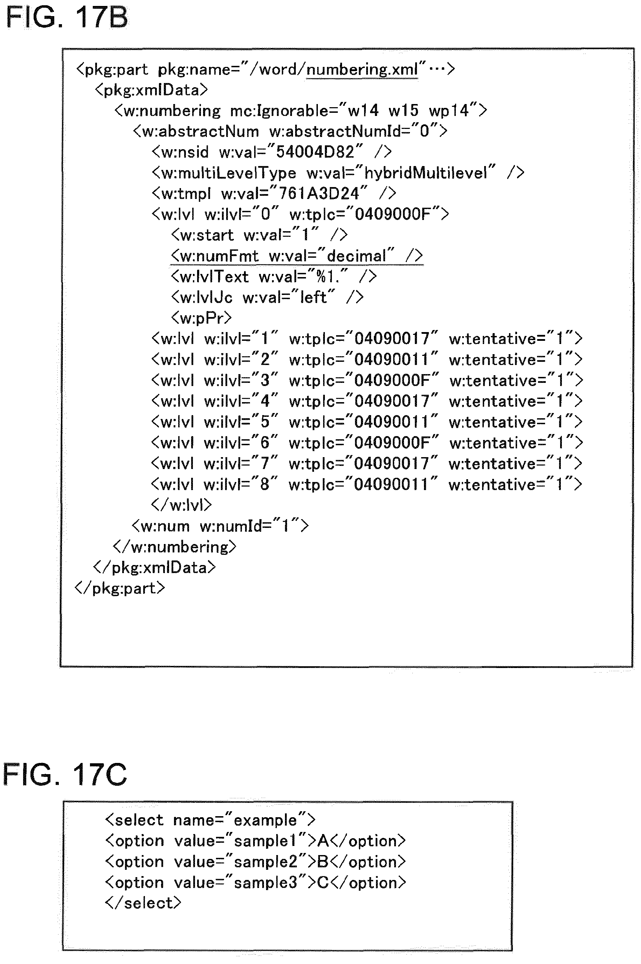

FIG. 17A illustrates another example of an ordered list object created by using the feature to create an ordered list of Microsoft Word. In the created OOXML document file, as illustrated in FIG. 17B, the character string "<w:numFmt w:val="decimal" />" appears in the xml file "numbering.xml". Therefore, when the character string "decimal" is found in the xml file "numbering.xml", a corresponding OOXML document in the OOXML document can be judged as an ordered list object. The conversion part of the document conversion program causes controller 11 to make HTML description as illustrated in FIG. 17C to create a pull-down menu object.

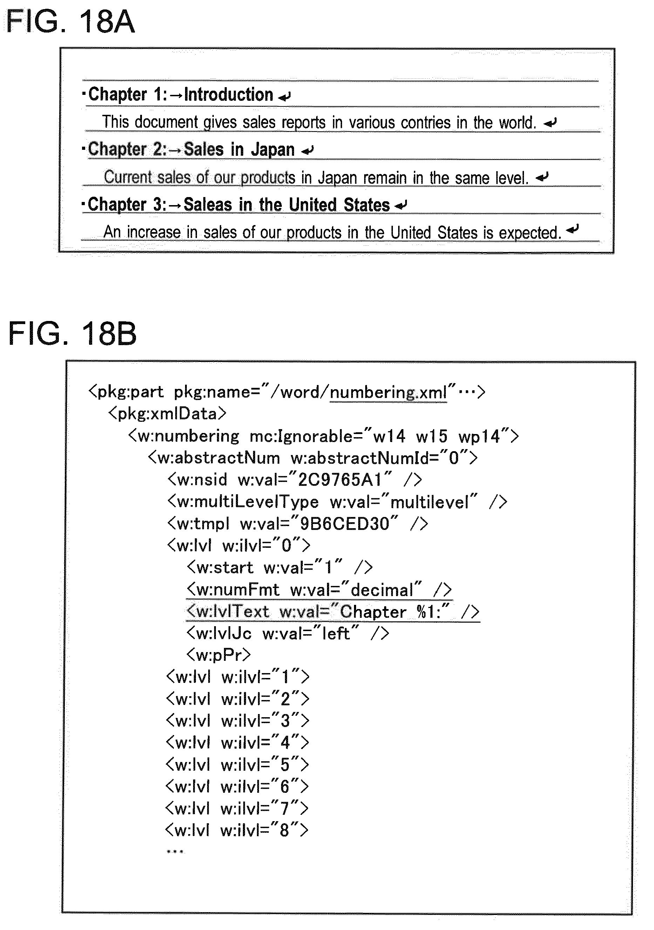

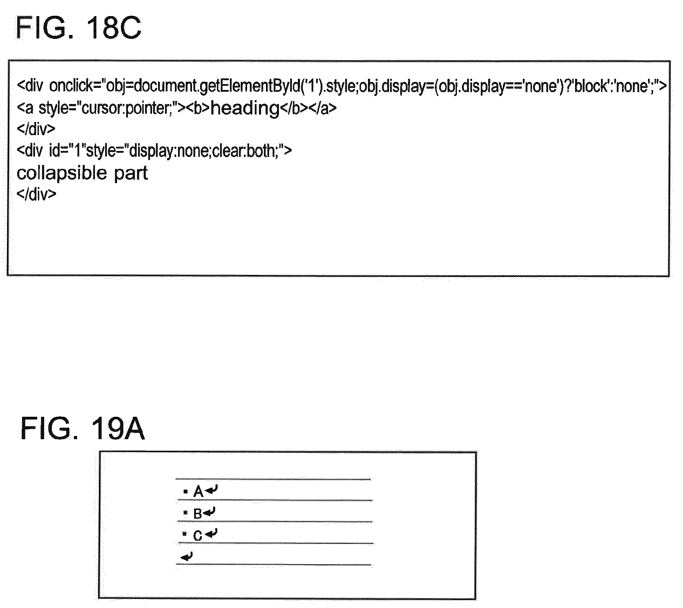

FIG. 18A illustrates another example of an object with headings created by using the feature to create a heading of a chapter or section of Microsoft Word. In the created OOXML document file, as illustrated in FIG. 18B, the character strings "<w:numFmt w:val="decimal" />" and "<w:lblText w:val="Chapter %1: />" appear in the xml file "numbering.xml". Therefore, when the character strings "decimal" and "Chapter %1" are found in the xml file "numbering.xml", a corresponding OOXML object in the OOXML document can be judged as an object with a heading. The conversion part of the document conversion program causes controller 11 to make HTML description as illustrated in FIG. 18C to create a collapsible object (an object with a collapsible menu).

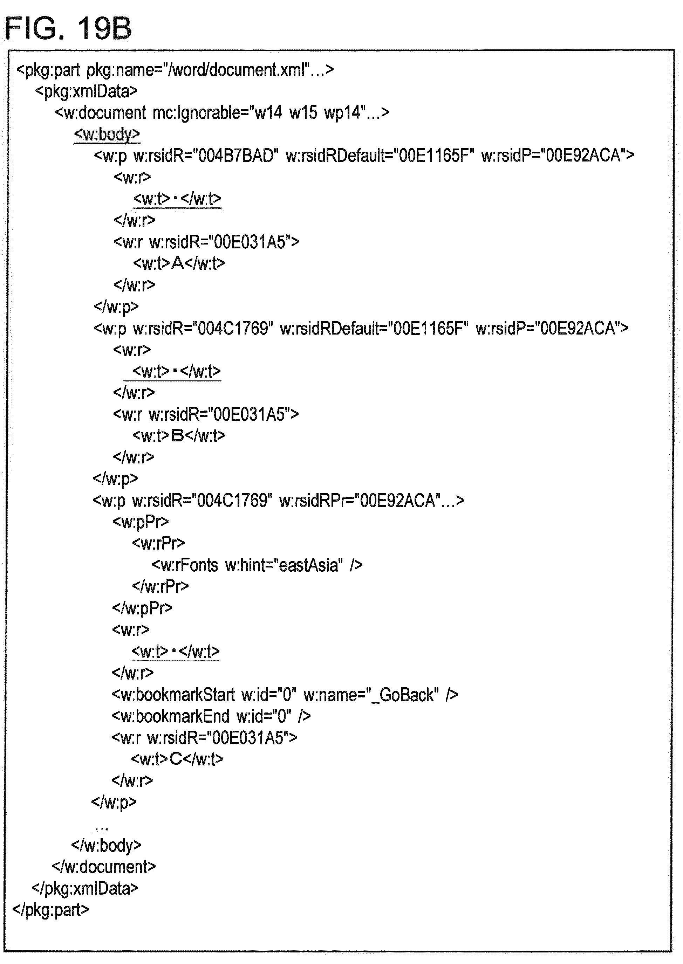

FIG. 19A illustrates an example of an unordered list object created by typing the ordered list rather than using the feature to create an unordered list of Microsoft Word. In the created OOXML document file, as illustrated in FIG. 19B, a character string "<w:t> • </w:t>" appears repeatedly in the element "<w:body>" in the xml file "document.xml". Therefore, when repetition of the character string "<w:t> • </w:t>" is found in the xml file "document.xml", a corresponding object in the OOXML document can be judged as an unordered list object. Similarly to the example illustrated in FIG. 16C, the conversion part of the document conversion program causes controller 11 to make the HTML description to create a multi-select menu object.

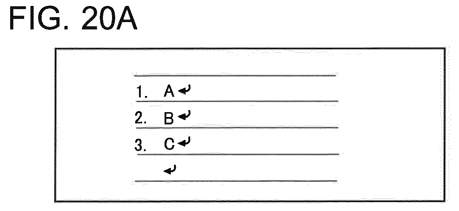

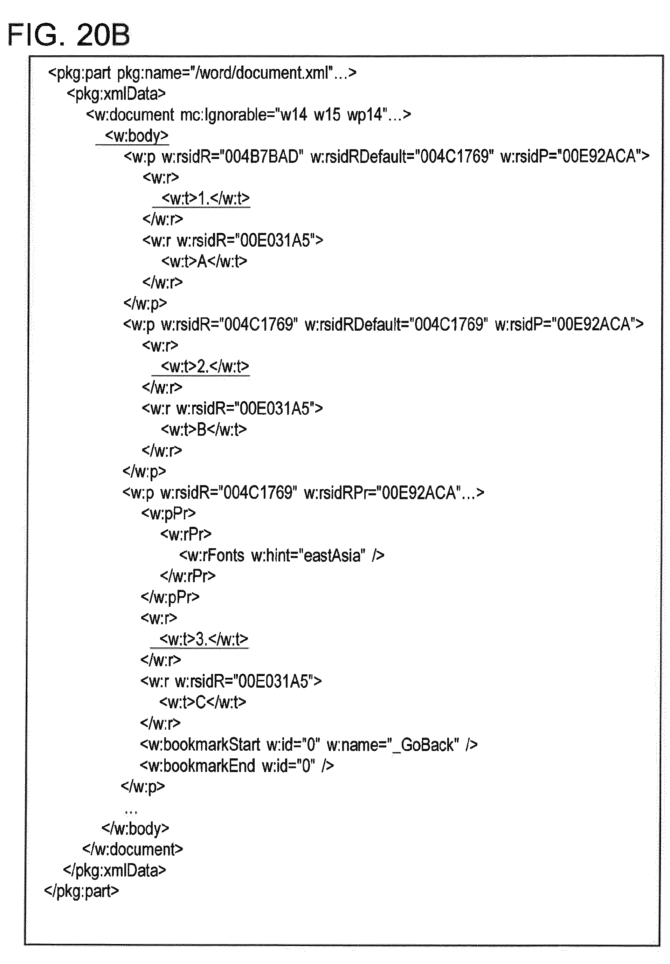

FIG. 20A illustrates an example of an ordered list object created by typing the ordered list rather than using the feature to create an ordered list of Microsoft Word. In the created OOXML document file, as illustrated in FIG. 20B, a series of character strings "<w:t>1. </w:t>", "<w:t>2. </w:t>" ... appear in the element "<w:body>" in the xml file "document.xml". Therefore, when the character strings using running numbers or letters like "1", "2" ... are found in the xml file "document.xml", a corresponding OOXML object in the OOXML document can be judged as an ordered list object. Similarly to the example illustrated in FIG. 17C, the conversion part of the document conversion program causes controller 11 to make the HTML description to create a pull-down menu object.

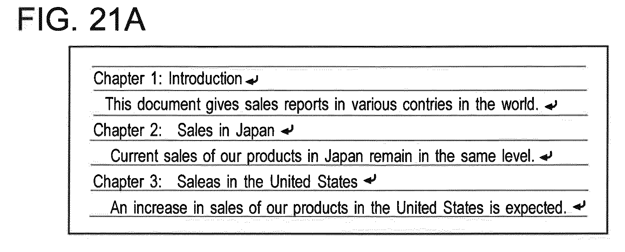

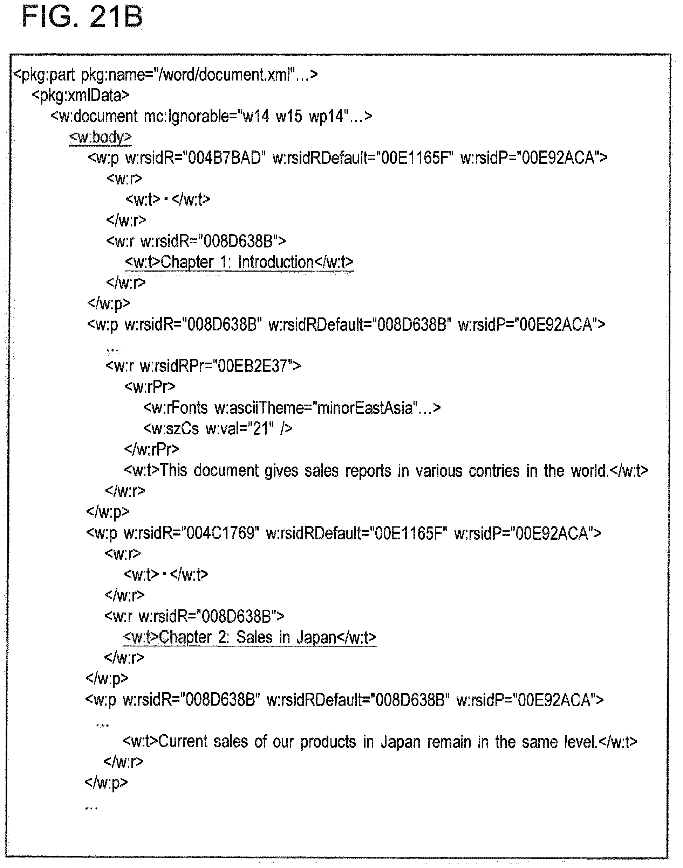

FIG. 21A illustrates an example of an object with headings created by typing paragraphs rather than using the feature to create an ordered list or ordered headings of Microsoft Word. In the created OOXML document file, as illustrated in FIG. 21B, a character string "<w:t>Chapter 1: Introduction</w:t>" appears in the element "<w:body>" in the xml file "document.xml". Therefore, when a character string "Chapter 1" is found in the xml file "document.xml", a corresponding OOXML object in the OOXML document can be judged as an object with a heading. Similarly to the example illustrated in FIG. 18C, the conversion part of the document conversion program causes controller 11 make the HTML description to create a collapsible object (an object with a collapsible menu).

In the present example, the document conversion method includes, in response to finding a specific xml element in the folder structure of an OOXML document file or a specific description in an OOXML document, converting an OOXML object in the OOXML document into a HTML-specific object corresponding to the specific xml object or the specific description. It allows a user to convert a document created by office suite application 11b into a desired HTML document which reflects a user's intention.

Incidentally, the present invention should not be limited to the above-mentioned embodiments and examples and unless deviating from the intention of the present invention, the described structure and operation may be changed appropriately.

For example, in the above-described examples, an OOXML document file was used as an example of an original document created by office suite application 11b, but the processing of the document conversion and the document conversion method of the present invention can be applied to an ODF document file as another example of the original document.

The present invention is applicable to a document conversion program of converting a document in OOXML format or ODF into a document in HTML format, a non-transitory computer-readable storage medium storing the document conversion program, and a document conversion method.

## Claims

1. A non-transitory computer-readable storage medium storing a document conversion program (11c) to be executed in an computing device (10) capable of converting an original document in a first document format which was created by an office suite application (11b) into a document in a second document format which is supported by a web browser, the document conversion program (11c), when being executed by a processor (12) of the computing device (10), causing the computing device (10) to perform processing comprising:
analyzing the original document to find, in the original document, an object described in a predetermined type of representation according to the first document format; and
converting the object described in the predetermined type of representation into a corresponding functional object described according to the second document format while referring to information to correlate the predetermined type of representation with the functional object, to create the document in the second document format, wherein the functional object can be operated by a user in the web browser through an operation unit of a computing device on which the web browser works.

2. The non-transitory computer-readable storage medium of claim 1,
wherein the analyzing includes
judging whether or not a file name of the original document includes a certain keyword, and
the converting includes,
in accordance with whether or not the file name of the original document includes the certain keyword, changing a mode of the converting to one of
a first mode to convert the object described in the predetermined type of representation into the corresponding functional object described according to the second document format, and
a second mode to convert the object described in the predetermined type of representation into a corresponding object described according to the second document format and having same or similar appearance as the object described in the predetermined type of representation.

3. The non-transitory computer-readable storage medium of claim 1 or 2,
wherein the analyzing includes
judging whether or not a predetermined identifier is added into an object described in the predetermined type of representation in the original document, and
the converting includes,
on finding the object into which the predetermined identifier is added in the original document, converting the object into which the predetermined identifier is added into the functional object on a basis of the predetermined identifier.

4. The non-transitory computer-readable storage medium of claim 3,
wherein the converting includes,
on finding, in the original document, an object in which a plurality of items are arranged one below the other and the predetermined identifier is described as a first item of the plurality of items, converting the plurality of items excluding the first item into the functional object correlated with the predetermined identifier.

5. The non-transitory computer-readable storage medium of claim 1 or 2,
wherein the analyzing includes
judging whether or not the original document has a folder structure including a specific xml element, and
the converting includes,
on finding the specific xml element in the folder structure, converting the object described in the predetermined type of representation into the corresponding functional object on a basis of the specific xml element.

6. The non-transitory computer-readable storage medium of claim 5,
wherein the converting includes,
on finding the specific xml element in the folder structure, converting the object described in the predetermined type of representation into the functional object correlated with a specific character string described in the specific xml element.

7. The non-transitory computer-readable storage medium of claim 1 or 2,
wherein the analyzing includes
judging whether or not the original document includes a specific description, and
the converting includes,
on finding the specific description, converting the object described in the predetermined type of representation into the corresponding functional object on a basis of the specific description.

8. The non-transitory computer-readable storage medium of claim 7,
wherein the converting includes,
on finding one of letters, numbers and symbols located at heads of paragraphs in the original document, as the specific description, converting contents of the paragraphs into the functional object correlated with the specific description.

9. The non-transitory computer-readable storage medium of any one of claims 1 to 8,
wherein the first document format is OOXML format or ODF, and the second document format is HTML format.

10. The non-transitory computer-readable storage medium of claim 9,
wherein the functional object is one of
a multi-select menu object which allows a user to select a plurality of options,
a pull-down menu object which allows a user to select one option, and
a collapsible object which allows a user to collapse or expand a part of contents of a document.

11. A document conversion method to be used in a computing device (10) capable of converting an original document in a first document format which was created by an office suite application (11b) into a document in a second document format which is supported by a web browser, the method comprising:
analyzing the original document to find, in the original document, an object described in a predetermined type of representation according to the first document format; and
converting the object described in the predetermined type of representation into a corresponding functional object described according to the second document format while referring to information to correlate the predetermined type of representation with the functional object, to create the document in the second document format, wherein the functional object can be operated by a user in the web browser through an operation unit of a computing device on which the web browser works.

12. The document conversion method of claim 11,
wherein the analyzing includes
judging whether or not a file name of the original document includes a certain keyword, and
the converting includes,
in accordance with whether or not the file name of the original document includes the certain keyword, changing a mode of the converting to one of
a first mode to convert the object described in the predetermined type of representation into the corresponding functional object described according to the second document format, and
a second mode to convert the object described in the predetermined type of representation into a corresponding object described according to the second document format and having same or similar appearance as the object described in the predetermined type of representation.

13. The document conversion method of claim 11 or 12,
wherein the analyzing includes
judging whether or not a predetermined identifier is added into an object described in the predetermined type of representation in the original document, and
the converting includes,
on finding the object into which the predetermined identifier is added in the original document, converting the object into which the predetermined identifier is added into the functional object in accordance with the predetermined identifier.

14. The document conversion method of claim 13,
wherein the converting includes,
on finding, in the original document, an object in which a plurality of items are arranged one below the other and the predetermined identifier is described as a first item of the plurality of items, converting the plurality of items excluding the first item into the functional object correlated with the predetermined identifier.

15. The document conversion method of claim 11 or 12,
wherein the analyzing includes
judging whether or not the original document has a folder structure including a specific xml element, and
the converting includes,
on finding the specific xml element in the folder structure, converting the object described in the predetermined type of representation into the corresponding functional object in accordance with the specific xml element.

16. The document conversion method of claim 15,
wherein the converting includes,
on finding the specific xml element in the folder structure, converting the object described in the predetermined type of representation into the functional object correlated with a specific character string described in the specific xml element.

17. The document conversion method of claim 11 or 12,
wherein the analyzing includes
judging whether or not the original document includes a specific description, and
the converting includes,
on finding the specific description, converting the object described in the predetermined type of representation into the corresponding functional object in accordance with the specific description.

18. The document conversion method of claim 17,
wherein the converting includes,
on finding one of letters, numbers and symbols located at heads of paragraphs in the original document, as the specific description, converting contents of the paragraphs into the functional object correlated with the specific description.

19. The document conversion method of any one of claims 11 to 18,
wherein the first document format is OOXML format or ODF, and the second document format is HTML format.

20. The document conversion method of claim 19,
wherein the functional object is one of
a multi-select menu object which allows a user to select a plurality of options,
a pull-down menu object which allows a user to select one option, and
a collapsible object which allows a user to collapse or expand a part of contents of a document.
